**Europäisches Patentamt**

**European Patent Office**

**Office européen des brevets**

(19)

(11) Numéro de publication : **0 351 362 B1**

# (12) FASCICULE DE BREVET EUROPEEN

(45) Date de publication du fascicule du brevet :
**30.12.92 Bulletin 92/53**

(51) Int. Cl.⁵ : **B60C 27/06, B60C 27/14**

(21) Numéro de dépôt : **89810495.5**

(22) Date de dépôt : **30.06.89**

(54) **Chemin de roulement pour dispositif antidérapant.**

(30) Priorité : **13.07.88 CH 2679/88**

(43) Date de publication de la demande :
**17.01.90 Bulletin 90/03**

(45) Mention de la délivrance du brevet :
**30.12.92 Bulletin 92/53**

(84) Etats contractants désignés :
**AT BE CH DE ES FR GB GR IT LI LU NL SE**

(56) Documents cités :
**EP-A- 0 007 297**
**EP-A- 0 288 882**
**EP-A- 0 298 906**

(56) Documents cités :
**CH-A- 125 351**
**DE-U- 8 811 805**
**FR-A- 1 051 990**
**US-A- 3 120 256**
**US-A- 4 244 412**

(73) Titulaire : **AUTOTYP S.A.**
**Case Postale 53 Route de Lausanne**
**CH-1037 Etagnières (CH)**

(72) Inventeur : **Metraux, Michel**
**Boulevard de la Forêt 23**
**CH-1009 Pully (CH)**

(74) Mandataire : **Dietlin, Henri**
**Dietlin & Cie S.A. Rue des Epinettes 19**
**CH-1227 Genève (CH)**

## Description

La présente invention est du domaine des dispositifs antidérapants pour roues et a plus particulièrement pour objet un ensemble du type des chaînes à neige pour roues de véhicules.

Tout le monde connaît les difficultés rencontrées par l'automobiliste obligé d'équiper son véhicule de chaînes, sur le bas-côté d'une route et souvent dans de mauvaises conditions atmosphériques. Afin d'éviter cette mise en place fastidieuse, on a déjà proposé des systèmes automatiques de mise en place de dispositifs antidérapants.

Dans le brevet français No 2.492.744, on décrit par exemple un dispositif antidérapant pour roue de véhicule comprenant un organe de rappel conçu pour mettre automatiquement en place une chaîne ou chemin de roulement antidérapant amovible sur la périphérie de ladite roue et l'y maintenir.

En raison du mouvement relatif de la chaîne par rapport à la surface périphérique du pneu, l'organe de rappel est monté rotativement par rapport à un boîtier central de fixation d'éléments de liaison radiaux ou bras, indirectement solidaires d'autre part dudit chemin de roulement. Un système de ce type est par exemple décrit dans la demande de brevet européen No 87115502.4 de la déposante, qui a plus particulièrement pour objet un organe de rappel et son montage par rapport au boîtier central.

Dans cette réalisation, on utilise d'autre part des éléments d'articulation disposés entre la chaîne et les bras, pour permettre de suivre toute déformation du chemin de roulement au moment de l'attaque du sol. Une telle déformation du chemin de roulement implique un pivotement par rapport à la tangente à la roue. L'articulation nécessaire crée un point d'affaiblissement du système et l'invention vise à pallier cet inconvénient.

Dans la demande de brevet allemand No P 35 45 528.4 de la déposante, on a décrit plus particulièrement des bras coudés, permettant d'assurer que la partie extérieure de chaque bras se trouve proche du pneu, en position de fonctionnement, tout en autorisant une dilatation du pneu, lorsqu'une charge est appliquée. Les bras sont de plus coulissants par rapport au boîtier central, pour autoriser le réglage du dispositif par rapport aux dimensions de la roue à équiper et pour rattraper la déformation du pneu lorsque celui-ci arrive au contact du sol.

En ce qui concerne le chemin de roulement plus précisément, on a l'habitude d'utiliser des chaînes qui sont solidaires d'éléments de maintien destinés à leur positionnement par rapport au pneu. Selon les réalisations ces éléments de maintien sont soit directement fixés à des segments de chaîne intermédiaires, soit présentent des passages pour celle-ci.

On a déjà proposé de réaliser le chemin de roulement au moyen d'éléments de forme, en matière souple, qui sont réunis à des maillons de chaînes intermédiaires. comme décrit dans la demande de brevet européen EP-A-0.298.906. Même si la surface des éléments souples est importante par rapport à la longueur des chaînes intermédiaires, on a par habitude conservé la dénomination courante de "chaînes à neige".

De tels systèmes nécessitent le réglage de la longueur du chemin de roulement antidérapant, réglage effectué par l'utilisateur en agissant sur la longueur d'un segment de la chaîne, dont on peut varier le nombre de maillons.

Un inconvénient des systèmes connus est le bruit supplémentaire engendré par les dispositifs antidérapants.

La présente invention vise à améliorer les dispositifs connus jusqu'ici et elle a pour objet un dispositif antidérapant pour roue de véhicule comprenant un chemin de roulement antidérapant, amovible sur la périphérie de ladite roue, un boîtier central de maintien d'éléments de liaison radiaux ou bras, solidaires d'autre part de guide-chaînes insérés dans ledit chemin de roulement et un organe de rappel conçu pour mettre automatiquement en place ledit chemin de roulement et le maintenir sur la périphérie de la roue.

Le dispositif selon l'invention est caractérisé par le fait que ledit chemin de roulement comporte des éléments d'élasticité agencés pour réaliser un raccourcissement dans le sens longitudinal du chemin de roulement pour rattraper le jeu entre la surface périphérique du pneu et ledit chemin de roulement antidérapant.

Un réglage de la longueur du chemin de roulement par l'utilisateur avant de mettre en place le chemin de chaîne sur le pneu n'est ainsi plus nécessaire. En outre un tel chemin de roulement peut en outre être monté sur des pneus de dimensions légèrement différentes.

Dans une première forme d'exécution préférentielle, le chemin de roulement comporte au moins deux cercles de chaînes disposés de part et d'autre sur la surface de roulement et des barrettes, placées transversalement et régulièrement le long dudit chemin. Dans cette variante, les éléments d'élasticité sont constitués par des ressorts (tels que ressort boudin, lame ressort ou anneau élastique) insérés entre deux barrettes adjacentes.

Dans une autre forme d'exécution prévue, les éléments d'élasticité sont constitués par des plaquettes souples constituant le chemin de roulement. Ces plaquettes présentent des découpes internes destinées à créer des languettes obliques et comportent des nervures, destinées à assurer l'ancrage au sol. Chaque plaquette comporte en outre des moyens de liaison à l'élément voisin. Dans une autre forme d'exécution, on peut utiliser des plaques rigides, séparées par des éléments de liaison élastique.

Le dessin annexé représente, à titre d'exemple non limitatif, des formes d'exécution de l'objet de l'invention.

La figure 1 est une vue en élévation d'une roue de véhicule équipée du dispositif selon l'invention, montrant schématiquement les différents composants.

La figure 2 est une vue similaire à la figure 1 montrant le détail d'un boîtier central, d'un bras, et d'un guide-chaîne.

La figure 3 est une vue en coupe selon l'axe III-III à la figure 2, présentant partiellement la roue du véhicule équipée du dispositif schématisé par son boîtier central, un bras, un guide-chaîne et un organe de rappel.

La figure 4 est une vue en perspective éclatée des deux coques formant le boîtier central, avec positionnement de deux bras, partiellement représentés.

La figure 5 est une vue en coupe d'une barrette, montrant d'un côté la mise en place d'un maillon de chaîne et de l'autre un maillon fixé.

La figure 6 est une vue en perspective d'un guide-chaîne et de sa liaison à un bras.

Les figures 7 à 9 sont des représentations de différents types de chemin de roulement selon l'invention dont l'élasticité est donnée respectivement :
- par un ressort boudin de traction
- par un anneau élastique,
- par une lame-ressort d'écartement ou de rapprochement.

Les figures 10 et 11 sont des variantes de types de chemin de roulement où les chaînes proprement dites sont remplacées par des plaquettes souples et élastiques, épousant la forme extérieure du pneu.

La figure 12 représente en perspective une autre forme d'exécution de chemin de roulement constitué par des éléments d'élasticité introduits entre des éléments non souples.

La figure 13 est une représentation, vue de dessus, d'un chemin de roulement à éléments de chaînes parallèles entre lesquels sont insérés en variantes :
- une plaquette élastique,
- un tendeur élastique en forme de navette,
- une plaquette élastique constituant le guide-chaîne.

La figure 14 est une vue en coupe selon XIV-XIV à la figure 13 de la plaquette guide-chaîne, représentant de plus les éléments de liaison à l'extrémité d'un bras.

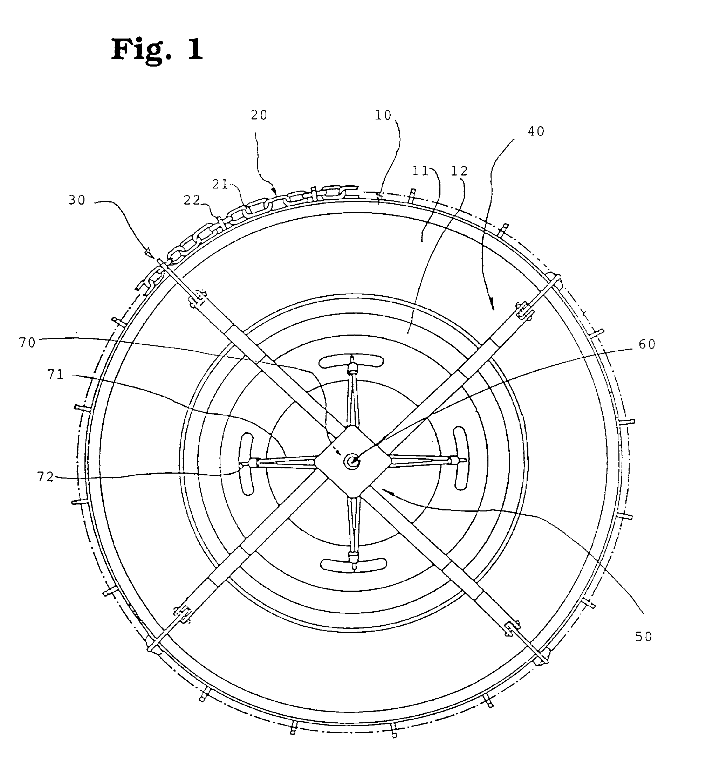

Dans la représentation de la figure 1, on a schématisé les composants principaux du dispositif faisant l'objet de l'invention.

La roue 10 du véhicule à équiper d'un dispositif antidérapant comporte, de manière classique, un pneu 11 et une jante 12, fixée de manière connue à l'essieu du véhicule.

Sur la périphérie du pneu 11 est représenté le chemin de roulement, indiqué par la référence générale 20, et qui est composé, de manière connue de l'homme du métier, de maillons de chaînes 21, dont l'écartement est obtenu au moyen de barrettes 22. Le chemin de roulement 20 comporte en outre au moins quatre éléments 30 dits guide-chaînes dont la forme générale est particulière et sera décrite en détail plus loin.

Les guide-chaînes 30 sont solidaires en outre de bras 40, disposés sensiblement en croix à partir d'un boîtier central 50, monté sur un arbre 60.

Le dispositif est complété par un organe de rappel 70, conçu pour mettre automatiquement en place le chemin de roulement 20 sur la roue 10 et l'y maintenir. Les composants de l'organe de rappel 70 visibles à la figure 1 sont des éléments de tension élastiques 71 et des crochets 72 de fixation à la jante 12 du véhicule. Les crochets 72 sont métalliques et sont généralement plastifiés ou en acier inoxydable.

En se référant aux figures de détail 2 et 3, on remarquera tout d'abord que le chemin de roulement 20 n'est pas représenté, pour la clarté du dessin. On retrouve dans ces figures la roue 10 du véhicule, ainsi que son pneu 11 et sa jante 12. On voit également l'un des guide-chaînes 30, dont un côté comporte comme visible à la figure 3 une partie sensiblement plane 31, destinée à juxtaposer transversalement la surface de roulement du pneu 11. La partie plane 31 du guide-chaînes 30 comporte deux ouvertures oblongues 32 et 33, destinées au passage des maillons de chaînes 21 du chemin de roulement 20. La partie plane comporte encore, dans une forme d'exécution préférentielle, deux épaulements 34 et 35, situés de part et d'autre du guide-chaînes 30, sensiblement au centre du chemin de roulement. Il est à noter que la hauteur des épaulements 34 ou 35 est supérieure ou égale à l'épaisseur du chemin de roulement 20.

Au dessin, on a représenté un guide-chaîne avec deux épaulements situés l'un en face de l'autre, mais il est bien sûr possible de modifier le nombre des épaulements et de les disposer en quinconce.

L'extrémité du guide-chaînes 30 opposée à la partie plane 31 se termine par une partie arquée 36, destinée à épouser la forme arrondie du pneu 11, munie d'une ouverture oblongue 37, pour le passage d'un axe 38 de liaison à l'un des bras 40. L'axe de liaison 38 peut, selon les variantes, être constitués par une goupille, un rivet ou un ensemble vis et écrou ou tout autre moyen remplissant la même fonction.

Chacun des bras 40 est constitué par une barre métallique de section rectangulaire de préférence, présentant une partie centrale 41, inclinée en direction du pneu et prolongée par deux parties 42 et 43 coudées par rapport à la partie centrale 41, qui sont sensiblement parallèles au plan de la roue.

La partie coudée externe 42 se termine par un pliage circulaire 44 destiné à former un manchon autour de la goupille 38 de liaison au guide-chaînes. Pour assurer la solidité de l'ensemble, on peut prévoir de souder par point l'extrémité repliée. Il va sans dire que la forme de la partie externe 42 sera telle que le bras ne frotte pas le pneu au cours du mouvement du véhicule. On donnera de préférence une légère courbure à la partie externe, courbure destinée à épouser les formes extérieures du pneu.

La partie coudée interne 43 est généralement rectiligne et se termine par un pliage à angle sensiblement droit 45, destiné à la fixation du bras dans le boîtier central 50, qui est, comme on le verra en détail par la suite, constitué de deux coques 51 et 52 présentant un passage central pour l'arbre 60.

Comme visible à la figure 3, l'arbre central 60 est constitué par une vis 61 traversant successivement une rondelle extérieure 62, les coques 51 et 52 du boîtier central 50, une rondelle médiane 63, le disque central 71 de l'organe élastique 70, une plaque de rappel 80, et une rondelle intérieure 64 avant de venir en prise avec un écrou 65. On notera encore qu'entre la tête de la vis 61 et l'écrou 65, on dispose un manchon 66.

Comme on l'a déjà mentionné, le dispositif est complété par un organe de rappel élastique 70 constitué par un disque central 71 présentant une ouverture centrale 73 et des prolongements radiaux 74 munis de renforts 75. Dans une variante préférentielle, chaque prolongement 74 se termine par un organe de préhension 76 destiné à faciliter l'introduction du crochet 72 entre l'une des ouvertures 77 pratiquées dans le prolongement 74 et des ouvertures ou des rebords de la jante 12 du véhicule.

La plaque de rappel 80 est circulaire et présente, à la figure 3, un dégagement 81 de dimension correspondante la rondelle intérieure 64 et à l'écrou 65, du côté de la roue du véhicule. Du côté opposé, la plaque comporte un épaulement cylindrique 82, de dimension correspondant à une ouverture pratiquée dans le disque central 71.

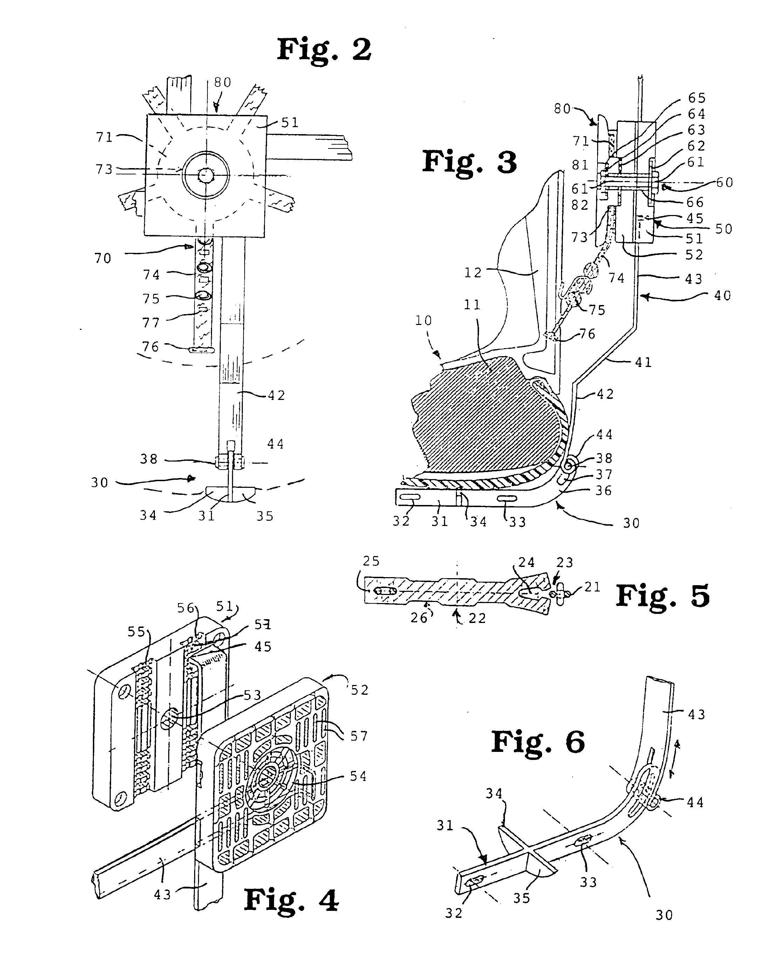

La figure 4 est une vue éclatée des coques 51 et 52 constituant le boîtier central 50. Chaque coque 51, 52 présente une ouverture centrale 53 pour le passage de la vis 61 et de son manchon 66. Elle comporte sur une face un dégagement circulaire 54 pour l'une des rondelles 62 ou 63 et sur la face opposée deux creusures rectilignes 55 et 56 assurant le passage de la partie interne 43 des bras 40. Chaque creusure présente une série de dégagements latéraux parallèles 57 destinés à recevoir le pliage 45 pratiqué à l'extrémité du bras 43. Dans la variante représentée au dessin, les dégagements 57 sont traversants. Dans une forme d'exécution préférentielle, les coques 51 et 52 sont carrées et identiques, et peuvent être montées de manière à ce que leurs creusures soient perpendiculaires en position de fonctionnement, afin d'autoriser le montage des quatre bras en croix.

La figure 5 montre l'une des barrettes 22 constituant un chemin de roulement 20, tel que représenté à la figure 1. Les barrettes sont des plaquettes métalliques. Au dessin, on a représenté dans la partie droite le profil tel qu'obtenu par estampage, qui montre un passage en bout 23 prolongé par une ouverture 24 destinée à recevoir un maillon de chaîne 21. Dans la partie gauche du dessin, le maillon est en place et une soudure 25 assure sa fixation. On remarquera que latéralement les barrettes présentent des creusures 26 dont la nécessité sera indiquée plus loin.

La figure 6 est un détail représentant le guide-chaîne 30 et sa fixation en bout de la partie externe 43 du bras 40. On y retrouve le pliage circulaire 44 formant un manchon destiné au passage de la goupille 38 de liaison au guide-chaînes 30. On voit dans cette figure les ouvertures 32 et 33, destinées au passage des maillons de chaînes ainsi que les épaulements 34 et 35 disposés de part et d'autre de la partie plane 31. On remarquera que, dans la variante représentée, les extrémités des épaulements sont pointues alors qu'elles étaient tronquées à la figure 2. Comme on le verra par la suite, l'important est de disposer au moins un épaulement 34 ou 35 transversalement par rapport au guide-chaîne. La partie arquée 36 du guide-chaîne est destinée à épouser la forme arrondie du pneu et présente une ouverture en arc de cercle 37, pour le passage de la goupille 38 de liaison avec le manchon 44.

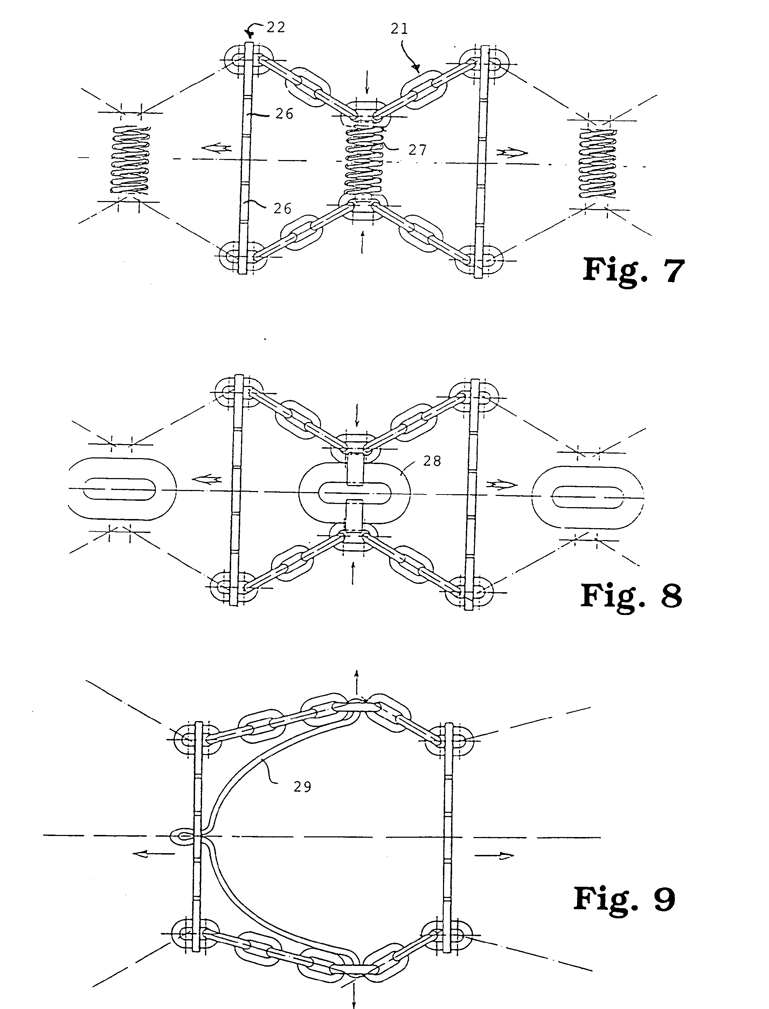

Dans la représentation partielle de chemins de roulement des figures 7 à 9, on retrouve les barrettes 22, vues de côté, avec leurs creusures 26, ainsi que les maillons de chaîne 21. Comme on le verra par la suite, les chemins de roulement doivent présenter une certaine élasticité, qui peut être obtenue de nombreuses manières.

A titre d'exemple, on propose :
- des ressorts boudins 27 à la figure 7,
- des anneaux de caoutchouc 28 à la figure 8 et
- des lames ressorts 29

qui sont disposés dans cette représentation entre deux barrettes 22 adjacentes. Selon les exécutions, les ressorts peuvent être métalliques ou plastiques, en caoutchouc ou synthétique. On choisira simplement des matières dont les caractéristiques du point de vue élasticité soient bonnes par grands froids.

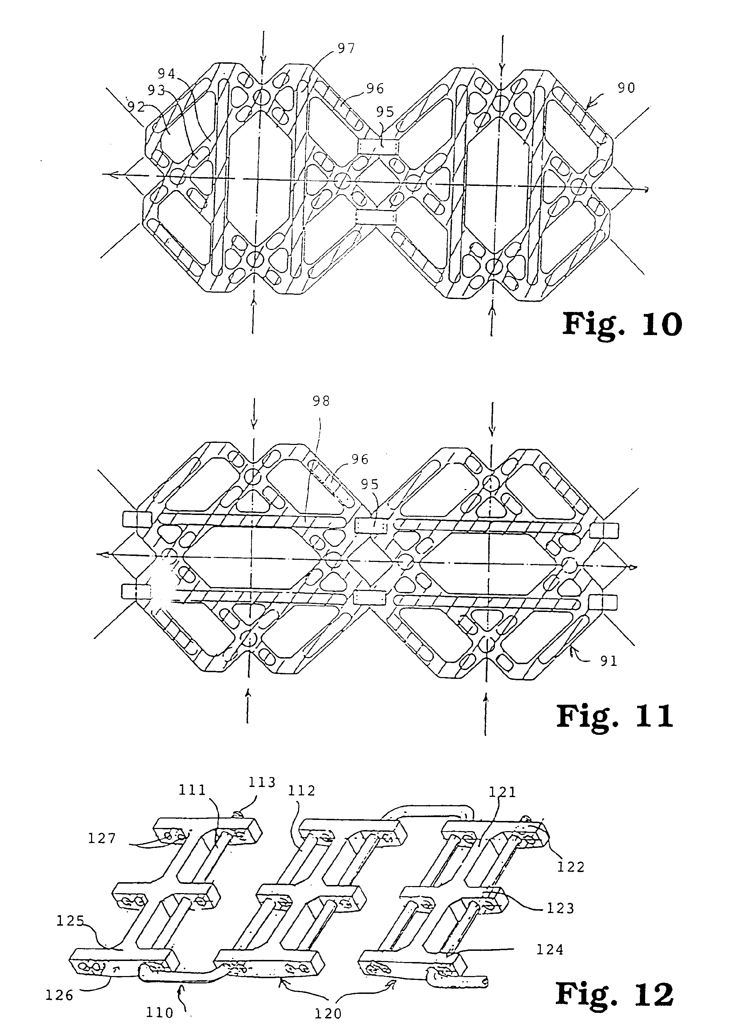

Les chemins de roulement des figures 10 et 11 représentent une autre forme d'exécution, permettant de remplacer les maillons de chaînes et les barrettes par des éléments élastomères 90 découpés en plaquettes 91 de longueur L, ou en multiples de cette longueur, réalisées en matière plastique par exemple. Pour assurer l'élasticité de l'ensemble, on prévoira des découpes internes 92, 93, destinées à créer des languettes obliques 94, disposées sensiblement à 45° par rapport au chemin de roulement. Les languettes obliques 94 font un angle par rapport à l'axe du chemin de roulement, de façon à créer une tension le long du chemin de roulement lorsque le dispositif est en place.

Les plaquettes 91 sont réunies par des bagues métalliques 95. En variante il est possible de prévoir des goupilles de liaison, traversant des prolongements prévus à cet effet. Il peut également être intéressant que les éléments de liaison soient élastiques, comme on le verra plus loin.

On remarquera encore que les plaquettes 91 comportent des nervures 96 et 97. Les nervures 96 sont disposées sur les languettes obliques 94 tandis que les nervures 97 s'étendent perpendiculairement à l'axe du chemin de roulement, pratiquement sur toute la largeur de celui-ci.

A la figure 11, on retrouve pratiquement les mêmes éléments 91 que précédemment, retournés de 90° de manière que les nervures 98 soient parallèles à l'axe du chemin de roulement. Toutes les nervures 96 à 98 ont pour but la réalisation de patins d'ancrage au sol.

On obtient ainsi un chemin de roulement ayant une élasticité contrôlée selon les axes principaux, à savoir l'axe du chemin de roulement et l'axe transversal, ainsi que tout axe intermédiaire, selon l'inclinaison des languettes.

Il va de soi que la matière élastique utilisée pour les plaquettes 91 doit garder ses propriétés élastiques lors des grands froids.

Dans une variante non représentée au dessin, on peut prévoir d'équiper les barrettes intermédiaires 22 de prolongements latéraux évitant la torsion, de manière similaire aux épaulements 34 et 35 du guide-chaines.

La figure 12 représente une troisième forme d'exécution de chemin de roulement, constitué par des éléments de liaison élastique 110 introduits entre des éléments non souples 120.

Les éléments d'élasticité 110 sont des pliages métalliques dont l'élasticité est assurée par la forme en "U". L'une des branches du U 111 est légèrement plus longue que l'autre 112 et comporte à son extrémité 113 des moyens de fixation qui seront décrits plus loin.

Les éléments intermédiaires 120 sont constitués par des plaques présentant une partie centrale 121 dont la longueur correspond à la largeur du chemin de roulement. La partie centrale 121 est prolongée de part et d'autre par trois ailes transversales 122, 123 et 124 destinées à être appliquées contre le pneu. Dans ce but la face supérieure 125 est plane ou légèrement incurvée. La face inférieure 126 est arrondie selon un rayon inférieur, de manière similaire aux épaulements 34 et 35 du guide-chaînes.

Chaque aile transversale 122, 123 ou 124 comporte des ouvertures 127 pour le passage des branches 111 ou 112 de l'élément d'élasticité 110. On notera que, dans la variante représentée au dessin, on a dans chaque transversale deux ouvertures 127, de manière à autoriser le réglage de la longueur finale du chemin de roulement.

Les plaques 120 sont de préférence réalisée en matière plastique, sans élasticité, pour éviter le bruit lors de l'utilisation du dispositif antidérapant.

L'extrémité 113 du "U" comporte des moyens de d'ancrage des éléments d'élasticité 110 avec les éléments intermédiaires 120. On peut prévoir de réaliser cette fixation avec des rondelles auto-bloquantes, avec des écrous ou des goupilles.

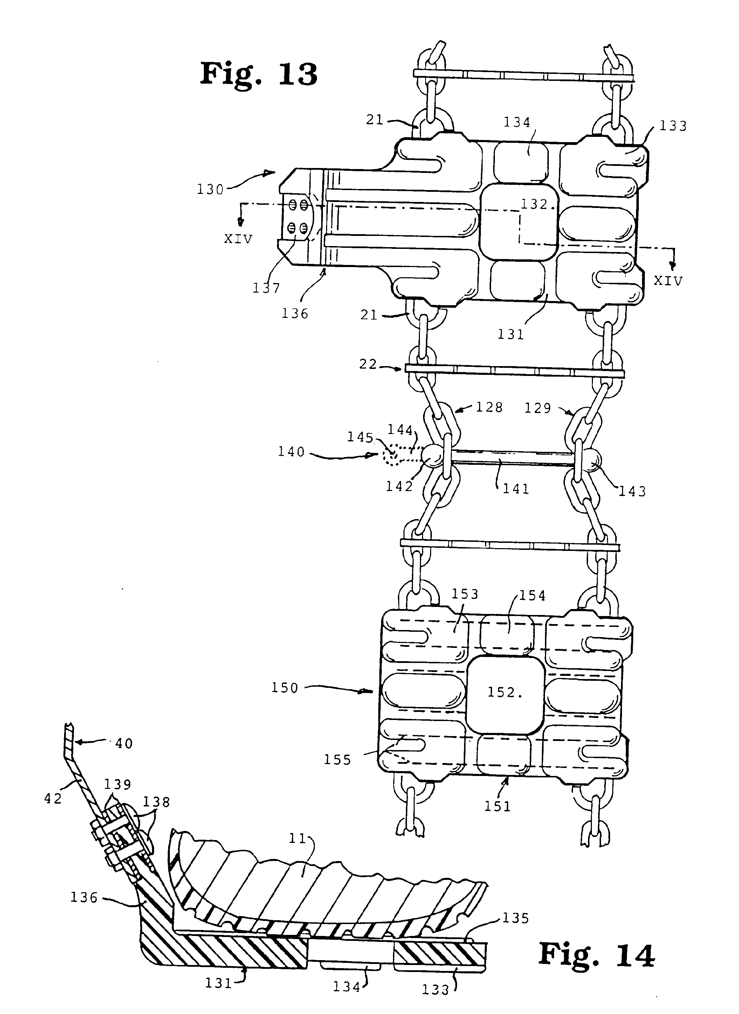

Le chemin de chaîne représenté à la figure 13 comporte divers types d'éléments élastomères, qui peuvent être utilisés soit séparément, soit en combinaison comme représenté au dessin. On y voit notamment une plaquette élastique 130 constituant le guide-chaîne, un tendeur 140 exerçant la même fonction que le ressort 27 de la figure 7 et une plaquette élastique 150, qui sont insérés entre les éléments de chaîne 128 et 129, en intercalant si désiré des barrettes 22 telles que décrites précédemment. Ces éléments élastomères sont dans une matière gardant ses propriétés d'élasticité lors des grands froids. On peut prévoir d'utiliser un caoutchouc renforcé par un tissu ou des fibres de nylon.

La plaquette guide-chaîne 130 possède une partie sensiblement plane 131, destinée à s'appuyer contre la surface extérieure du pneu et présentant une découpure centrale 132 augmentant l'élasticité de l'ensemble. Sur la face visible au dessin, qui correspond à celle en contact avec le sol, la plaquette comporte des reliefs 133, 134 destinés à constituer des profilés d'attaque pour augmenter la prise au sol. De chaque côté de la plaquette sont prévus des anneaux 21 de liaison aux éléments de chaîne.

La plaquette guide-chaîne 130 est représentée en coupe à la figure 14 où l'on notera les nervures transversales 135 pratiquées sur la face en contact avec le pneu. Chaque plaquette comportera avantageusement 5 à 6 nervures 135 parallèles. La plaquette 130 comporte en outre un prolongement latéral arqué 136 dont l'extrémité présente une creusure 137 destinée à recevoir la partie coudée externe 42 du bras 40. La plaquette 130 est fixée au bras 40 au moyen de vis 138 à tête arrondie du côté du pneu 11. On peut renforcer l'extrémité de la plaquette par des inserts métalliques 139.

On peut également prévoir une articulation entre le prolongement arqué et la partie externe du bras, de manière connue de l'homme de métier.

A la figure 13, un tendeur 140 en forme de navette exerce la même fonction que le ressort 27 de la figure 7, à savoir une traction entre les éléments de chaîne 128 et 129. Ce tendeur est constitué par une âme centrale cylindrique 141 munie à chaque extrémité d'une tête sphérique 142, 143. Pour permettre l'insertion du tendeur dans les éléments de chaîne 128 et 129, la tête 142 est munie vers l'extérieur d'une languette 144 présentant un trou 145 pour le passage d'un outil destiné à tirer la navette 140 dans les maillons concernés, par déformation de la boule 142. La languette 144 est alors coupée et c'est la raison pour laquelle elle est représentée en pointillés au dessin.

La plaquette 150, tout comme la plaquette 130 décrite plus haut, est constituée par un corps rectangulaire 151 comportant une découpure centrale 152 et muni :

- sur une face de crampons 153, 154 pour améliorer l'accrochage au sol, et
- sur la face opposée de nervures parallèles 155, destinées à attaquer transversalement la surface de roulement du pneu, représentées au dessin par des traitillés.

On notera encore que pour améliorer l'adhérence au sol, les reliefs 133 ou 135 présentent une forme générale de "U", disposés symétriquement par rapport à l'axe du chemin de roulement.

Le montage des éléments décrits jusqu'ici s'effectue de la manière suivante, avant leur mise à disposition de l'utilisateur.

Le chemin de roulement 20 est réalisé de manière connue de l'homme de métier selon l'une des variantes décrites précédemment :

- soit avec des chaînes 21 et des éléments à ressorts 27, 28, 29 ou 140, ainsi que des barrettes 22 (voir figures 7 à 9 et 14 par exemple)
- soit avec des plaquettes 91 ou 150, souples et élastiques (selon les figures 10 et 11)
- soit avec des plaques rigides 120, insérées entre des éléments d'élasticité (voir figure 12)

tout en intercalant quatre guide-chaînes 30 ou 130, à intervalles réguliers, des maillons intermédiaires 21 étant insérés dans les ouvertures oblongues 32 et 33.

Il est évident que la longueur d'un tel chemin de roulement 20 sera adaptée aux différents diamètres de pneus du commerce.

La liaison entre l'un des guide-chaînes 30 et le bras 40 correspondant est une charnière constituée par une goupille 38 de liaison disposée dans l'ouverture oblongue 37 d'une part et le pliage circulaire 44 d'autre part. La plaque souple 130 des figures 13 et 14 autorise une liaison fixe au bras 40, au moyen de vis par exemple. Toutefois il est également possible d'insérer une articulation entre la plaque guide-chaîne 130 et le bras, par exemple une boucle travaillant avec jeu par rapport à l'extrémité du bras.

Le montage des bras 40 dans le boîtier central 50 est réalisé en introduisant la partie interne 43 de chaque bras 40 dans l'une des creusures rectilignes 55 et 56, tout en introduisant l'extrémité pliée 45 dans l'un des dégagements latéraux 57. On comprend maintenant l'intérêt de la série de dégagements parallèles 57, qui autorisent, avec des composants identiques, la réalisation de dispositifs antidérapants pour différentes dimensions de roues.

Le serrage de la vis 61 constituant l'arbre central 60 dans l'écrou 65 correspondant permet de solidariser :

- les deux coques 51 et 52 du boîtier 50, ce qui assure par conséquent la fixation des bras 40, ainsi que

- l'organe de rappel 70 dont l'ouverture centrale 73 est disposée autour de l'épaulement cylindrique 82 de la plaque de rappel 80.

Comme visible à la figure 3, on dispose entre les composants qui viennent d'être mentionnés des rondelles 62 à 64, destinées à autoriser d'une part un mouvement relatif entre les coques 51 et 52 du boîtier, et d'autre part un mouvement relatif du boîtier 50 par rapport à la plaque de rappel 80 et à l'organe élastique 70 qui y est monté, pour des raisons qui seront explicitées plus tard.

Il est à noter que tous les montages et réglages mentionnés jusqu'ici sont réalisés en usine et que le vendeur n'a plus à intervenir.

En position de non utilisation du dispositif selon l'invention, les bras 40 ne s'étendent pas radialement en croix, mais sont presque superposés deux par deux, par rotation de l'une des coques 51 ou 52 par rapport à l'autre. Les guide-chaînes 30 sont repliés contre les bras 40 et le chemin de roulement 20 se dispose librement de sorte que l'encombrement de l'ensemble est réduit.

Lorsque l'utilisateur doit mettre en place le dispositif antidérapant, il écarte les bras 40 et les dispose en croix. Puis il fait reposer sur le dessus de la roue une partie du chemin de roulement 20, tout en positionnant les bras 40 comme représenté à la figure 1, afin que deux des guide-chaînes 30 soient presque en place.

Il fixe dans des ouvertures ou des dégagements de la jante 12 les crochets 72 passés auparavant dans les ouvertures 77 des prolongements radiaux 74 de l'organe de rappel élastique 70, en agissant sur les organes de préhension 76 prévus à cet effet. Par contre, l'utilisateur n'a plus à vérifier et ajuster la tension du chemin de roulement, puisque celui-ci est élastique.

Lorsque deux roues, voire quatre, sont équipées de cette manière, l'utilisateur n'a plus'qu'à rouler, en avant en ou arrière, pour que le chemin de roulement se mette automatiquement en place sur la périphérie de la roue et ceci grâce à la forme particulière donnée aux bras et aux guide-chaînes, qui tendent à disposer le chemin de roulement en regard de la périphérie du pneu, sous l'action de la force centrifuge, conjuguée à la force axiale de l'organe de rappel. Il faudra bien sur plusieurs tours de roue avant que le chemin de roulement soit en place sur le pneu, mais l'utilisateur n'a plus à intervenir.

Les épaulements latéraux 34 ou 35 des guide-chaînes 30 sont comme on l'a déjà mentionné de hauteur supérieure ou égale à l'épaisseur du chemin de roulement 20. Ils permettent d'éviter, au moment de leur écrasement par le pneu sous le poids du véhicule, une torsion de la charnière constituée par le manchon 44, l'ouverture 37 et la goupille 38. L'homme du métier sait combien cette articulation présentait de risques de détérioration et de cassure. On remarquera que lors de l'écrasement d'un guide-chaîne par le pneu, l'ouverture oblongue 37 autorise un léger déplacement du bras axialement.

Grâce à l'élasticité du chemin de roulement, on est assuré d'avoir un dispositif antidérapant toujours en place, malgré les déformations locales du pneu et sans déplacement des guide-chaînes 30 par rapport aux bras 40.

Au cours du mouvement du véhicule, les éléments évitant le dérapage sont, selon les réalisations, les maillons de chaînes 21, le chant des barrettes 22 (dont l'effet est accentué grâce aux découpures 26), ainsi que les nervures 96 à 98 des plaquettes 91 ou les crampons 133,134 et 153,154 des plaquettes 130 et 150, sur lesquelles on peut encore envisager de disposer des crampons métalliques.

On notera encore que le mouvement relatif entre l'organe élastique 70 sur sa plaque de rappel 80 et les bras 40 solidaires du boîtier central autorise un certain déplacement du chemin de roulement par rapport à la roue du véhicule.

Pour enlever les dispositifs antidérapants, il suffit de détacher l'organe de rappel 70 de la roue, de retirer le chemin de roulement et les guide-chaînes se trouvant à la partie supérieure du pneu et d'avancer ou reculer légèrement le véhicule pour dégager le reste du chemin de roulement.

## Revendications

1. Dispositif antidérapant pour roue de véhicule, comprenant un chemin de roulement antidérapant (20), amovible sur la périphérie de ladite roue (10), un boîtier central (50) de maintien d'éléments de liaison radiaux ou bras (40), solidaires d'autre part de guide-chaînes (30) insérés dans ledit chemin de roulement et un organe de rappel (70) conçu pour mettre automatiquement en place ledit chemin de roulement et le maintenir sur la périphérie de la roue, caractérisé par le fait que ledit chemin de roulement comporte des éléments d'élasticité agencés pour réaliser un raccourcissement dans le sens longitudinal du chemin de roulement pour rattraper le jeu entre la surface périphérique du pneu et ledit chemin de roulement antidérapant.

2. Dispositif antidérapant selon la revendication 1 dont le chemin de roulement comporte au moins deux cercles (128,129) de chaînes à maillons (21) disposés de part et d'autre sur la surface de roulement, des barrettes (22) étant placées transversalement et régulièrement le long dudit chemin, caractérisé en ce que lesdits éléments d'élasticité sont constitués par des ressorts insérés entre deux barrettes adjacentes.

3. Dispositif antidérapant selon la revendication 2, caractérisé en ce que lesdites barrettes (22) comportent des éléments latéraux aptes à éviter la torsion de la barrette au moment du contact entre le sol et la roue.

4. Dispositif antidérapant selon la revendication 2 ou 3, caractérisé en ce que ledit élément d'élasticité est un ressort boudin (27) tendant à rapprocher ou à éloigner les dites chaînes.

5. Dispositif antidérapant selon la revendication 2 ou 3, caractérisé en ce que ledit élément d'élasticité est un anneau (28) tendant à rapprocher ou à éloigner les dites chaînes.

6. Dispositif antidérapant selon la revendication 2 ou 3, caractérisé en ce que ledit élément d'élasticité est une lame ressort (29), tendant à éloigner ou rapprocher les dites chaînes.

7. Dispositif antidérapant selon la revendication 2 ou 3, caractérisé en ce que ledit élément d'élasticité est une plaquette élastomère (130, 150) insérée entre deux éléments de chaînes.

8. Dispositif antidérapant selon la revendication 7, caractérisé en ce que la plaquette (130) comporte un prolongement (136) muni de moyens de fixation au bras (40) et constituant ledit guide-chaîne (30).

9. Dispositif antidérapant selon la revendication 7, caractérisé en ce que ladite plaquette comporte sur une face des crampons (133,134; 153,154) pour améliorer l'accrochage au sol, et sur la face opposée des nervures parallèles (135;155) destinées à attaquer transversalement la surface de roulement du pneu.

10. Dispositif antidérapant selon l'une des revendications 4 à 6, caractérisé en ce que ledit élément d'élasticité est en métal élastique.

11. Dispositif antidérapant selon l'une des revendications 4 à 8, caractérisé en ce que ledit élément d'élasticité est en matière synthétique ou caoutchouc.

12. Dispositif antidérapant selon la revendication 1, caractérisé en ce que lesdits éléments d'élasticité sont constitués par des plaquettes souples (91) constituant ledit chemin de roulement.

13. Dispositif antidérapant selon la revendication 12, caractérisé en ce que lesdites plaquettes souples (91) sont reliées par des anneaux métalliques (95).

14. Dispositif antidérapant selon la revendication 12, caractérisé en ce que lesdites plaquettes souples (91) présentent des découpes internes (92, 93) destinées à créer des languettes obliques (94), faisant un angle par rapport à l'axe du chemin de roulement, les languettes étant agencées de façon à créer une tension le long dudit chemin de roulement.

15. Dispositif antidérapant selon la revendication 14, caractérisé en ce que les languettes obliques (94) comportent des nervures (96) aptes à assurer l'ancrage au sol.

16. Dispositif antidérapant selon la revendication 14, caractérisé en ce que les plaquettes (91) comportent des nervures (97, 98) aptes à assurer l'ancrage au sol, qui sont disposées respectivement perpendiculairement ou dans l'axe du chemin de roulement.

17. Dispositif antidérapant selon l'une des revendications 12 à 16, caractérisé en ce que les plaquettes (91,130,150) comportent des clous.

18. Dispositif antidérapant selon la revendication 1, caractérisé en ce que lesdits éléments d'élasticité sont constitués par des éléments de liaison (110) introduits entre des éléments non souples (120).

19. Dispositif antidérapant selon la revendication 18, caractérisé en ce que lesdits éléments de liaison (110) sont en forme de "U" dont chaque branche est apte à être solidarisé à l'élément non souple (120) voisin.

20. Dispositif antidérapant selon la revendication 19, caractérisé en ce que au moins l'une desdites branches comporte des moyens d'ancrange dans ledit élément non souple voisin.

21. Dispositif antidérapant selon la revendication 18, caractérisé en ce que lesdits éléments rigides (120) sont constitués par des plaques présentant une partie centrale (121) prolongée de part et d'autre par au moins une aile transversale (122, 123, 124).

22. Dispositif antidérapant selon la revendication 21, caractérisé en ce que chaque aile comporte au moins une ouverture pour le passage dudit élément de liaison.

23. Dispositif antidérapant selon la revendication 21, caractérisé en ce que lesdites plaques rigides sont en matière plastique.

24. Dispositif antidérapant selon la revendication 1, caractérisé en ce que ledit guide-chaîne (30) disposé dans le chemin de roulement antidérapant, est muni d'au moins un élément latéral (34, 35) apte à éviter la torsion entre ledit organe (30) et ledit élément de liaison radial (40), au moment du contact entre le sol et la roue.

25. Dispositif antidérapant selon la revendication 24, caractérisé en ce que lesdits éléments latéraux (34, 35) sont situés de part et d'autre dudit organe (30).

26. Dispositif antidérapant selon la revendication 1, caractérisé en ce que ledit boîtier central est constitué par deux coques (51, 52) présentant sur une face deux creusures rectilignes parallèles (55, 56) aptes à recevoir une partie interne (43) des bras (40).

27. Dispositif antidérapant selon la revendication 26, caractérisé en ce que chaque creusure (55, 56) présente une série de dégagements latéraux parallèles (57) aptes à recevoir des pliages à l'équerre (45) pratiqués à l'extrémité dudit bras (43), le choix des dégagements permettant la concordance avec les dimensions de la roue à équiper.

28. Dispositif antidérapant selon les revendications 26 et 27, caractérisé en ce que les coques présentent en outre une ouverture centrale (53) pour le passage d'un arbre central (60) et sur la face opposée aux creusures (55, 56) un dégagement circulaire (54) apte à recevoir une rondelle.

29. Dispositif antidérapant selon la revendication 28, caractérisé en ce que les coques 51 et 52 sont identiques.

**Patentansprüche**

1. Eine Antirutschvorrichtung für die Räder eine Kraftfahrzeuges mit einem rutschfesten Spurkranz (20), der löslich auf dem Außenumfang eines Rades (10) montiert ist, einem Zentralgehäuse (50) für die Halterung von radialen Elementen für die Verbindung mit Armen (40), die wiederum mit Kettenführungen (30) fest verbunden sind, die in den Spurkranz eingeschoben sind, und mit einem Rückzugselement (70), das dafür konzipiert ist, den Spurkranz automatisch zu plazieren und auf dem Umfang des Rades zu halten, **dadurch gekennzeichnet**, daß der Spurkranz Elastizitätselemente aufweist, die so ausgelegt sind, daß sie eine Verkürzung des Spurkranzes in Längsrichtung bewirken, um das Spiel zwischen der Umfangsfläche des Reifens und dem rutschfesten Spurkranz auszugleichen.

2. Eine Antirutschvorrichtung nach Anspruch 1, deren Spurkranz mindestens zwei Kreise (128, 129) von Gliederketten (21) aufweist, die auf beiden Seiten der Lauffläche angeordnet sind, sowie Verbindungsstege (22), die in Querrichtung in regelmäßigem Abstand entlang dieser Fläche angeordnet sind,
**dadurch gekennzeichnet**, daß die Elastizitätselemente aus Federn bestehen, die zwischen zwei benachbarten Verbindungsstegen eingeschoben sind.

3. Eine Antirutschvorrichtung nach Anspruch 2,
**dadurch gekennzeichnet**, daß die Verbindungsstege (22) seitliche Elemente aufweisen, die geeignet sind, eine Torsion des Verbindungssteges im Augenblick der Berührung zwischen dem Boden und dem Rad zu verhindern.

4. Eine Antirutschvorrichtung nach einem der Ansprüche 2 oder 3,
**dadurch gekennzeichnet**, daß das Elastizitätselement eine Schraubenfeder (27) ist, die die Ketten zusammenziehen oder spreizen kann.

5. Eine Antirutschvorrichtung nach einem der Ansprüche 2 oder 3,
**dadurch gekennzeichnet**, daß das Elastizitätselement ein Ring (28) ist, der die Ketten zusammenziehen oder spreizen kann.

6. Eine Antirutschvorrichtung nach einem der Ansprüche 2 oder 3,
**dadurch gekennzeichnet**, daß das Elastizitätselement eine Blattfeder (29) ist, die die Ketten zusammenziehen oder spreizen kann.

7. Eine Antirutschvorrichtung nach einem der Ansprüche 2 oder 3,
**dadurch gekennzeichnet**, daß das Elastizitätselement ein Elastomerplättchen (130, 150) ist, das zwischen zwei Kettenelementen eingeschoben ist.

8. Eine Antirutschvorrichtung nach Anspruch 7,
**dadurch gekennzeichnet**, daß das Plättchen (130) eine Verlängerung (136) aufweist, die mit Mitteln für die Befestigung an dem Arm (40) versehen ist und die Kettenführung (30) bildet.

9. Eine Antirutschvorrichtung nach Anspruch 7,
**dadurch gekennzeichnet**, daß das Plättchen auf einer Seite mit Krallen (133, 134; 153, 154) ausgestattet ist, um die Bodenhaftung zu verbessern, und auf der gegenüberliegenden Seite mit parallelen Rippen (135; 155), die dafür bestimmt sind, an der Lauffläche des Reifens in Querrichtung anzugreifen.

10. Eine Antirutschvorrichtung nach einem der Ansprüche 4 bis 6,
**dadurch gekennzeichnet**, daß das Elastizitätselement aus einem elastischen Metall besteht.

11. Eine Antirutschvorrichtung nach einem der Ansprüche 4 bis 8,
**dadurch gekennzeichnet**, daß das Elastizitätselement aus einem synthetischen Material oder aus Kautschuk besteht.

12. Eine Antirutschvorrichtung nach Anspruch 1,
**dadurch gekennzeichnet**, daß die Elastizitätselemente aus weichen Plättchen (91) bestehen, die den Spurkranz bilden.

13. Eine Antirutschvorrichtung nach Anspruch 12,
**dadurch gekennzeichnet**, daß die weichen Plättchen (91) mit Hilfe von metallischen Ringen (95) verbunden sind.

14. Eine Antirutschvorrichtung nach Anspruch 12,
**dadurch gekennzeichnet**, daß die weichen Plättchen (91) mit inneren Ausschnitten (92, 93) versehen sind, die dafür bestimmt sind, schräge Langetten (94) zu bilden, die winklig zur Achse des Spurkranzes angeordnet sind, wobei diese Langetten so konzipiert sind, daß sie eine Spannung entlang dem Spurkranz erzeugen.

15. Eine Antirutschvorrichtung nach Anspruch 14,
**dadurch gekennzeichnet**, daß die schrägen Langetten (94) Rippen (96) aufweisen, die geeignet sind, die Verankerung am Boden zu gewährleisten.

16. Eine Antirutschvorrichtung nach Anspruch 14,
**dadurch gekennzeichnet**, daß die Plättchen (91) Rippen (97, 98) aufweisen, die geeignet sind, die Verankerung am Boden zu gewährleisten und die jeweils rechtwinklig zu oder in der Achse des Spurkranzes angeordnet sind.

17. Eine Antirutschvorrichtung nach einem der Ansprüche 12 bis 16,
**dadurch gekennzeichnet**, daß die Plättchen (91, 130, 150) mit Spikes versehen sind.

18. Eine Antirutschvorrichtung nach Anspruch 1,
**dadurch gekennzeichnet**, daß die Elastizitätselemente aus Verbindungselementen (110) bestehen, die zwischen die nicht weichen Elemente (120) eingeschoben sind.

19. Eine Antirutschvorrichtung nach Anspruch 18,

**dadurch gekennzeichnet**, daß die Verbindungselemente (110) U-förmig ausgebildet sind, deren jeweiliger Schenkel geeignet ist, mit einem benachbarten nicht weichen Element (120) fest verbunden zu werden.

20. Eine Antirutschvorrichtung nach Anspruch 19, **dadurch gekennzeichnet**, daß mindestens einer der Schenkel Mittel für die Verankerung in dem benachbarten nicht weichen Element aufweist.

21. Eine Antirutschvorrichtung nach Anspruch 18, **dadurch gekennzeichnet**, daß die steifen Elemente (120) aus Platten bestehen, die einen zentralen Teil (121) aufweisen, der auf beiden Seiten mindestens durch einem Querflügel (122, 123, 124) verlängert wird.

22. Eine Antirutschvorrichtung nach Anspruch 21, **dadurch gekennzeichnet**, daß jeder Flügel mindestens eine Öffnung für den Durchgang des Verbindungselementes aufweist.

23. Eine Antirutschvorrichtung nach Anspruch 21, **dadurch gekennzeichnet**, daß die steifen Platten aus einem Plastikmaterial bestehen.

24. Eine Antirutschvorrichtung nach Anspruch 1, **dadurch gekennzeichnet**, daß die in dem rutschfesten Spurkranz angeordnete Kettenführung (30) mindestens mit einem seitlichen Element (34, 35) versehen ist, das geeignet ist, eine Torsion zwischen dem Element (30) und dem radialen Verbindungselement (40) im Augenblick der Berührung zwischen dem Boden und dem Rad zu verhindern.

25. Eine Antirutschvorrichtung nach Anspruch 24, **dadurch gekennzeichnet**, daß die seitlichen Elemente (34, 35) auf beiden Seiten des Elementes (30) angeordnet sind.

26. Eine Antirutschvorrichtung nach Anspruch 1, **dadurch gekennzeichnet**, daß das Zentralgehäuse aus zwei Halbschalen (51, 52) besteht, die auf einer Seite zwei rechteckige parallele Vertiefungen (55, 56) aufweisen, die dafür geeignet sind, einen inneren Teil (43) der Arme (40) aufzunehmen.

27. Eine Antirutschvorrichtung nach Anspruch 26, **dadurch gekennzeichnet**, daß jede Vertiefung (55, 56) eine Reihe von parallelen seitlichen Aussparungen (57) aufweist, die geeignet sind, Winkelfalzungen (45) aufzunehmen, die am Ende des Armes (43) vorgesehen sind, wobei die Auswahl der Aussparungen die Abstimmung mit den Abmessungen des auszurüstenden Rades ermöglicht.

28. Eine Antirutschvorrichtung nach einem der Ansprüche 26 und 27, **dadurch gekennzeichnet**, daß die Halbschalen außerdem eine zentrale Öffnung (53) für den Durchgang einer zentralen Welle (60) aufweisen und auf der den Vertiefungen (55, 56) gegenüberliegenden Fläche eine kreisförmige Aussparung (45), die geeignet ist, eine Scheibe aufzunehmen.

29. Eine Antirutschvorrichtung nach Anspruch 28, **dadurch gekennzeichnet**, daß die Halbschalen 51 und 52 identisch sind.

## Claims

1. An antiskid device for a vehicle wheel comprising :
   - an antiskid rolling track (20) movable on the periphery of the wheel (10),
   - a central housing (50) maintaining a plurality of radial connecting members or arms (40) which are further attached to chain guides (30) inserted in said rolling track, and
   - a return means (70) for automatically positioning said rolling track and for holding it on the periphery of the wheel,
   characterised in that said rolling track comprises a plurality of resilient means arranged for shortening the longitudinal length of the rolling track, eliminating the play between the peripheral surface of the tire and said antiskid rolling track.

2. The antiskid device according to claim 1 wherein said rolling track comprises at least two circles (128,129) of chain links (21) forming sides of the rolling track and a plurality of bars (22) placed transversely and at regular intervals along said track, characterised in that said resilient means are springs inserted between two adjacent bars.

3. The antiskid device according to claim 2, characterised in that said bars(22) possess lateral means for avoiding twisting of the bar when the ground and the wheel are in contact.

4. The antiskid device according to claim 2 or 3, characterised in that said resilient means is a helical spring (27) intended for increasing or decreasing the space between said chains.

5. The antiskid device according to claim 2 or 3, characterised in that said resilient means is a ring (28) intended for increasing or decreasing the space between said chains.

6. The antiskid device according to claim 2 or 3, characterised in that said resilient means is a spring leaf (29) intended for increasing or decreasing the space between said chains.

7. The antiskid device according to claim 2 or 3, characterised in that said resilient means is an elastomeric plate (130,150) inserted between two chain parts.

8. The antiskid device according to claim 7, characterised in that said plate (130) has an extension (136) having means for fastening to said radial connecting arm (40) and thereby forming said chain guide (30).

9. The antiskid device according to claim 7, characterised in that said plate comprises on one face lugs (133,134; 153,154) for improving the grip with the ground and on the opposite face parallel ribs (135;155) intended to attack the tread of the tire in the transverse direction.

10. The antiskid device according to one of the claim 4 to 6, characterised in that said resilient means is made from a resilient metal.

11. The antiskid device according to one of the claim 4 to 8, characterised in that said resilient means is made from a synthetic material or rubber.

12. The antiskid device according to claim 1, characterised in that said resilient means are flexible plates (91) forming said rolling track.

13. The antiskid device according to claim 12, characterised in that said flexible plates (91) are connected by metallic rings (95).

14. The antiskid device according to claim 12, characterised in that said flexible plates (91) have inner cutouts (92,93) creating tongues (94) disposed obliquely with respect to the direction of motion of the vehicle wheel, the tongues being arranged so as to create tension along said rolling track.

15. The antiskid device according to claim 14, characterised in that said oblique tongues (94) comprise rib means (96) for ensuring grip with the ground.

16. The antiskid device according to claim 14, characterised in that said plates (91) comprise rib means (97,98) for ensuring grip with the ground, which rib means are disposed transverse or parallel to the direction of motion of the vehicle wheel.

17. The antiskid device according to one of the claims 12 to 16, characterised in that said plates (91,130,150) comprise spikes.

18. The antiskid device according to claim 1, characterised in that said resilient means comprise linking elements (110) introduced between nonflexible elements (120).

19. The antiskid device according to claim 18, characterised in that said linking elements (110) have a U-shape, each arm of the "U" being attached to the adjacent nonflexible element (120).

20. The antiskid device according to claim 19, characterised in that one of said arm comprises means for anchoring in said adjacent nonflexible element.

21. The antiskid device according to claim 18, characterised in that said nonflexible elements (120) are plates having a central part (121) extended on either side by at least one transverse wing (122,123,124).

22. The antiskid device according to claim 21, characterised in that each wing comprises at least one opening for the passage of said linking element.

23. The antiskid device according to claim 21, characterised in that said nonflexible plates are made from a plastic material.

24. The antiskid device according to claim 1, characterised in that said chain-guide (30) inserted in said antiskid rolling track has at least one lateral means (34,35) for avoiding twisting between said chain guide (30) and said radial connecting arm (40) when the ground and the wheel are in contact.

25. The antiskid device according to claim 24, characterised in that said lateral means (34,35) are located on opposite side of said chain guide (30).

26. The antiskid device according to claim 1, characterised in that said central housing comprises two shells (51,52) having on one face two parallel straight grooves (55,56) for receiving an inner part (43) of the connecting arms (40).

27. The antiskid device according to claim 26, characterised in that each groove (55,56) has a series of parallel lateral recesses (57) for receiving square curvings (45) made in the end of said arm (43), thereby permitting matching with the dimensions of the wheel to be equipped.

28. The antiskid device according to claims 26 and 27, characterised in that said shells further have a central opening (53) for the passage of a central shaft (60) and have, on the face opposite the grooves (55,56), a circular recess (54) adapted for receiving a washer.

29. The antiskid device according to claim 28, characterised in that said shells (51,52) are identical.

# Fig. 1

EP 0 351 362 B1

**Fig. 2**

**Fig. 3**

**Fig. 5**

**Fig. 4**

**Fig. 6**

14

EP 0 351 362 B1

Fig. 7

Fig. 8

Fig. 9

Fig. 10

Fig. 11

Fig. 12

# Fig. 13

# Fig. 14